(19) Europäisches Patentamt
European Patent Office
Office européen des brevets

(11) **EP 2 864 758 B1**

(12) **EUROPÄISCHE PATENTSCHRIFT**

(45) Veröffentlichungstag und Bekanntmachung des Hinweises auf die Patenterteilung:
**05.04.2017 Patentblatt 2017/14**

(21) Anmeldenummer: **13739620.6**

(22) Anmeldetag: **17.06.2013**

(51) Int Cl.:
*G01N 21/53* (2006.01)     *G01N 15/14* (2006.01)
*G01N 15/10* (2006.01)     *G01N 33/28* (2006.01)

(86) Internationale Anmeldenummer:
**PCT/EP2013/062495**

(87) Internationale Veröffentlichungsnummer:
**WO 2013/189879 (27.12.2013 Gazette 2013/52)**

(54) **SENSOR UND VERFAHREN ZUR MESSUNG VON PARTIKELN IN MEDIEN**

SENSOR AND METHODS FOR MEASURING PARTICLES IN MEDIA

CAPTEUR ET PROCÉDÉ DE MESURE DE PARTICULES DANS DES MILIEUX

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.06.2012  DE 102012105379**

(43) Veröffentlichungstag der Anmeldung:
**29.04.2015  Patentblatt 2015/18**

(73) Patentinhaber: **Donner, Bernd**
**57800 Freyming (FR)**

(72) Erfinder: **Donner, Bernd**
**57800 Freyming (FR)**

(56) Entgegenhaltungen:
**EP-A1- 0 984 278     WO-A1-97/40360
US-A- 5 001 424**

EP 2 864 758 B1

**Beschreibung**

Die Erfindung betrifft einen Sensor zur Messung von Partikeln in kontaminierten Medien mit einer optisch durchlässigen Messzelle, durch die eine Kapillare zur Durchleitung und Messung des Mediums hindurchführt, einem optischen Detektor und einem magnetischen Detektor.

Für eine Partikelerkennung werden diese nach ihrer spezifischen Art und stofflichen Eigenschaften unterschieden. Als Partikel werden alle stofflichen Bestandteile definiert, die sich in einem örtlichen Detektionsbereich (Kontrollraum) befinden, ausgenommen des Stoffes, der das Medium darstellt, in dem die Partikel enthalten sind. Die Partikel können dabei in fester flüssiger oder gasförmiger Form oder in Form von Vakuum im Medium enthalten sein. Das Medium besteht aus einem homogenen Stoff mit einer ausreichenden Transparenz für die Durchdringung für die bei der Detektion zum Einsatz kommenden quasi magnetostatischen bzw. elektromagnetischen Wechselfelder.

Dabei werden magnetisch aktive Partikel im interessierenden Größenbereich durch die gleichzeitige Beaufschlagung von magnetischen Wechselfeldern zur Erkennung der magnetischen Eigenschaften eines diskreten im Detektionsbereich befindlichen Partikels als auch durch die Beaufschlagung mit elektromagnetischen Wechselfeldern vorzugsweise im Bereich der Lichtwellen zur Spezifikation der Größe und Form erkannt. Die dazu erforderlichen magnetischen Wechselfelder werden durch Spulen erzeugt. Die Detektion der mit magnetisch aktiven Partikeln in Wechselwirkung stehenden Magnetfelder wird mit geeigneten Detektoren durchgeführt wie z.B. Spulen, Hall- Effekt- Detektoren etc. Eine Beaufschlagung mit statischen Magnetfeldern ist prinzipiell auch möglich. Dabei besteht jedoch der Nachteil, dass durch die dabei auf die Partikel ausgeübten gerichteten Kräfte diese im Detektionsbereich festgehalten und zur Störung des Gesamtsystems führen könnten. Zudem können mit diesem Verfahren nur ferromagnetische Partikel detektiert werden. Nichteisenmetalle besitzen eine zu geringe Permeabilität um verwertbare Signalgrößen zu erhalten, wenn sie statischen Magnetfeldern ausgesetzt werden. Ihre Erkennung beruht daher auf der dynamischen Induktion von Wechselströmen und der dadurch hervorgerufenen Rückwirkung auf die sie verursachenden magnetischen Wechselfelder. Daher kommt diese Variante eher für Anwendungen in Betracht, bei denen das Medium, in dem die Partikel eingeschlossen sind einen festen Aggregatzustand aufweist (z.B. Mineralien, Erze etc.).

Ein Großteil der in der Praxis anfallenden Proben können wegen unzureichender Fähigkeit der Analysegeräte nicht vermessen werden. Dies liegt in der simplen Ausgestaltung des Kontrollraumes der stets weitgehend prismatisch geformt ist. Dabei kann man unterscheiden in dünne flächige "vorhangförmige" und säulenförmige runde oder quadratischen Querschnittes.

Der Grund für die unzureichende Detektierbarkeit liegt in dem relativ großen und oftmals bis zu 100% des Messbereichs parabelförmigen Kennlinie und in dem im Verhältnis zum Strömungsquerschnitt des Messvolumens großen Kontrollraumvolumens, was bei einer Steigerung der Partikelkonzentrationen, insbesondere der kleineren Partikel, frühzeitig zu Koinzidenzen führt. Koinzidenzen liegen vor, wenn sich mehr als ein einziges Partikel zur gleichen Zeit im Kontrollraum aufhält und damit zur Signalerzeugung beiträgt. Dem wird mit Verfahren nach dem Stand der Technik damit begegnet, dass die zu untersuchenden Suspensionen durch Beimischung von Fluiden mit möglichst geringer und bekannter Partikelkonzentration soweit verdünnt werden, bis die Partikelkonzentration in einen Bereich reduziert wird, bei dem die Sensoren wieder funktionieren. Dieses Verfahren ist sehr aufwändig und eignet sich zudem nur für Laboruntersuchungen und ist grundsätzlich nicht für Online-Messungen mit fest eingebauten Sensoren anwendbar.

Auch aus diesem Grunde werden derzeit keine Partikelsensoren angeboten, die den kompletten Bereich der Partikelkonzentrationen abdecken, wie sie z.B. in ISO4406 oder ISO16232 angegeben sind.

Insbesondere bei länger im Einsatz befindlichen Fluiden nimmt der Anteil an Ölalterungsprodukten zu. Eine Folge davon ist, dass die Opazität derart ansteigen kann, dass der Fluidstrom nicht mehr ausreichend optisch durchdrungen und damit der Intensitätsverlust nicht mehr ausgeglichen werden kann. Dies wirkt besonders nachteilig bei Sensoren, welche die Kontrollraummodellierung mittels Vignettierung und damit unter Inkaufnahme hohen Lichtverlustes bewerkstelligen. Daneben ist es zusätzlich erforderlich, diesen Lichtverlust durch eine höhere Nachverstärkung auszugleichen, was sich wiederum nachteilig auf den erreichbaren Signal-Rauschabstand und damit auf die untere Nachweisgrenze der Partikelgröße und auf die Bandbreite im Frequenzbereich auswirkt. Mit der Verringerung der Frequenzbandbreite geht eine proportionale Verringerung der erreichbaren Strömungsgeschwindigkeit des Fluids im Messvolumen einher, die sich sekundär negativ in Form von erhöhter Anfälligkeit gegen Verschmutzung bis hin zu Verstopfung auswirkt.

Eine weitergehende Analyse der Kontamination hinsichtlich ihrer stofflichen Beschaffenheit (z.B. der Unterscheidung von Metall und Nichtmetall oder Luft) ist nicht in Form eines kompakten, miniaturisierten und für Massenanwendungen preiswürdigen Sensors verfügbar. Bei Anwesenheit einer heterogenen Partikelverteilung nach ihrer Substanz (z.B. Quarz, Luft, Ruß und Additive), wie es in der Praxis oft der Fall ist, werden Alarmgrenzen durch die Anwesenheit für die Anlage unschädlicher Bestandteile überschritten oder umgekehrt bei Vorhandensein gefährdender Partikel nicht erreicht mit den jeweils negativen Folgen.

Aus der mangelnden Unterscheidung der stofflichen Zusammensetzung der Partikel einerseits und der "empirischen" nicht zurückführbaren Kalibrierung auf SI-Einheiten andererseits ergeben sich bei bestimmten Anwendungen fatale Fehlmessungen. Neben den nachteiligen Folgen der resultierenden Fehleinschätzung der bestehenden Kontamination auf die Anlage oder Maschine entstehen wesentliche Vorbehalte, die Sensoren für routine- bzw. serienmäßigen Einsatz zu qualifizieren.

Bei einer betriebstechnischen Überwachung einer Anlage besteht oft die Notwendigkeit, eine entsprechende Konditionierung der Fluidparameter für die Sensoren mittels zusätzlicher Funktionselemente wie z.B. Stromteiler, Durchflussregler, Rückschlagventile, Luftlösungsstrecken mit oft unsicherer Wirkungsweise herzustellen. Deren korrekte Funktionsweise kann nicht unter allen Betriebsbedingungen gewährleistet werden, was zu falschen Ergebnissen bzw. Fehlmessungen führt, die im schlimmsten Fall nicht sofort als solche erkannt werden mit den entsprechenden negativen Folgen für zu überwachende Anlage.

Bei Analysegeräten, die an Hochdruckanschlüssen betrieben werden sollen, muss der Fluidausgang des Gerätes an eine Tankleitung angeschlossen werden, oder, wenn nicht vorhanden, muss das austretende Fluid aufgefangen und anschließend entsorgt werden. Eine direkte Rückführung in den Fluidkreislauf ist aufgrund mangelnder Druckstabilität der hydraulischen internen Komponenten oft nicht gegeben.

Große Totvolumina innerhalb von Sensoren verursachen verschiedene Probleme:

- Große Volumina der hydraulischen Verbindungen oder Vorlaufleitungen zur Lösung von Gasblasen im Fluid üblicher Sensoren und Anordnungen verfälschen die Messergebnisse durch Kontamination und langsame Vermischung mit der jeweils vorhergehenden Probe, aufgrund der sich die Anzeige verzögert.
- Zum anderen können sich dort "Schmutznester" bilden, die sich bei veränderlichen Betriebsbedingungen wie Druckstößen oder schwankenden Volumenströmen plötzlich in den Fluidstrom des Sensors einbringen und Phantomalarme durch falsche Messwerte auslösen können.
- Große Volumina erfordern große Probenmengen und Zwischenspülvorgänge, um stabile Messwerte zu erhalten.

In der internationalen Patentanmeldung WO 2007/121879 A1 ist ein Verfahren und eine Sensorvorrichtung zur Bestimmung der Partikelzahlen in einem Ölvolumen beschrieben, wobei in einer Messzelle ein optischer, ein magnetischer und ein dielektrischer Sensor angeordnet sind. Der optische Sensor ist eine einfache Lichtschranke, bei der das Durchlicht quantifiziert wird.

Aus der Patentanmeldung US 2010/0297780 A1 ist ein Sensor zur Messung von Partikeln in kontaminierten Medien bekannt, bei dem ein optischer Sensor und /oder ein magnetischer Sensor eingesetzt werden können. Eine konkrete Ausbildung dieser Sensoren ist nicht angeben. Ein magnetisches Differential-Wechselfeld zur Partikelbeeinflussung ist nicht vorgesehen.

Aus der Patentanmeldung US 2010/0033158 A1 ist ein Verfahren zur Bestimmung von Verklumpungen von magnetischen Partikeln in einem Medium bekannt, bei dem auch magnetische Sensoren einsetzbar sind. Eine konkrete Ausbildung dieser Sensoren ist nicht angeben. Ein magnetisches Differential-Wechselfeld zur Partikelbeeinflussung ist nicht vorgesehen.

Aus der Patentanmeldung WO97/40360 A1 ist ein Sensor und Verfahren zur Messung von Partikeln in kontaminierten Medien bekannt, der eine Meßzelle umfasst in welcher ein Flüssigkeitskanal vorgesehen ist. Neben der Flüssigkeitskanal sind eine Hallsonde und zwei Permanentmagneten angeordnet, um magnetischen Teilchen zu Detektieren und ein zweiter, weiter am Kanal angeordneter, optischer Sensor für die optische Partikeldetektion.

Der bekannte Stand der Technik beschreibt nur Sensoren, deren Kontrollräume nicht zusammenfallen, bzw. sich nicht so überlagern, dass die jeweilige Sensitivität zur gleichen Zeit am gleichen Ort ihr Maximum erreicht. Daher ist es nicht möglich einem diskreten Partikel jeweils alle detektierbaren Eigenschaften zuzuordnen

In Sensoren integrierte Dichtungen und weitere, vom Fluid benetzte Materialien, sind nicht gegenüber allen verwendeten Fluiden beständig. Dies zwingt den Kunden und den Hersteller gleichermaßen zur Vervielfachung der Typenvarianten und zu entsprechender Logistik mit der erforderlichen Lagerhaltung und entsprechender Vervielfachung der Kapitalbindung.

Für die Messung der wichtigsten Fluidparameter ist eine Vielzahl diskreter Einzelsensoren (für jede Messgröße je ein Sensor) erforderlich, die nicht nur fluidtechnisch konditioniert und in einer Zusammenschaltung mit einem Hydraulikblock verbunden werden müssen, sondern zusätzlich auch elektrisch und softwaremäßig miteinander zusammengefasst werden müssen. Dafür sind auch im Bereich der Elektronik zusätzliche Komponenten und Software erforderlich.
Bei Verwendung verschiedenartiger Sensoren mit fluidtechnischer Konditionierung sind durch die Zusammenschaltung hohe Investitionen erforderlich.
Damit sind die am Markt angebotenen Sensoren für bereits bekannte Massenanwendungen zu teuer wie z.B. für:

- Kunststoffspritzmaschinen der mittleren und unteren Preisklasse,
- Dieselmotoren für Mobilhydraulik und maritime Anwendungen,
- Automatikgetriebe für Nutzfahrzeuge und hochwertige PKW,
- Hydraulikkomponenten wie Pumpen, Proportionalventile, Zylinder etc.,
- Gasturbinen.

Die als Messmittel erforderliche regelmäßige Kalibrierung der Sensoren stellt für den Anwender ein großes Problem dar:

- Die Kalibrierung der Sensoren ist nicht auf SI-Einheiten zurückführbar.
- Einschlägige Kalibrierverfahren sind sehr teuer, ungenau, zeitaufwändig (bis zu 7 Stunden, zzgl. Aus- und Wiedereinbau und Transport).
- Kalibriereinrichtungen sind aufwändige Apparaturen und bedürfen ständiger Kontrolle und Wartung durch hochqualifiziertes Fachpersonal.

Die erforderliche Rekalibrierung der Sensoren in festgelegten Zeitabständen ist umständlich und zeitaufwändig und steht einer Verbreitung der Messtechnik ebenfalls entgegen. Kunden sind grundsätzlich nicht in der Lage, Kalibrierungen selbst durchzuführen. Ein geringer Funktionsumfang zwingt den Anwender zur Integration verschiedener Komponenten von teils mehreren Lieferanten. Dabei entstehen für ihn sowohl die Problematik der Systemverantwortlichkeit bei auftretenden Problemen mit Unverträglichkeiten als auch die daraus resultierende Übernahme der Haftung.

Es ist die Aufgabe der Erfindung, eine Vorrichtung und ein Verfahren zur Messung von Partikeln in Medien zu offenbaren, welche die genannten Nachteile aus dem Stand der Technik vermeiden.

Diese Aufgabe wird mit einer Vorrichtung nach Anspruch 1 und einem Verfahren nach Anspruch 18 gelöst.

Vorteilhafte Ausgestaltungen der Erfindung sind in den abhängigen Ansprüchen beschrieben.

Der erfindungsgemäße Sensor zur Messung von Partikeln in kontaminierten Medien besitzt eine optisch durchlässige Messzelle, durch die eine Kapillare zur Durchleitung und Messung des Mediums hindurchführt. Mindestens ein optischer Detektor und ein magnetischer Detektor sind an der Messzelle angeordnet. Dabei ist die Messzelle zylinderförmig und die Kapillare verläuft in ihr koaxial. In der Mitte der Kapillare befindet sich ein Kontrollraum, auf den ein optisches Linsensystem mit einer Lichtquelle und mindestens einem optischen Detektor fokussiert ist. Auf dem Schaft der Messzelle befinden sich Differenzialspulen zur Erzeugung und Detektion eines koaxialen magnetischen Wechselfeldes, die den magnetischen Detektor bilden. Sie sind so angesteuert, dass sich das magnetische Wechselfeld im Zentrum des Kontrollraums aufhebt.

Die Messzelle ist druckstabil ausgeführt, vorzugsweise aus Glas. Ein vorteilhaft strömungstechnisch ausgestaltetes Kapillarvolumen besitzt einen runden Querschnitt ohne Querschnittssprünge bei Komponentenübergängen vor und im Bereich um den Kontrollraum in Hinblick auf eine ungestörte Laminarströmung und einem minimalen Volumen von nur wenigen mm$^3$. Dadurch werden hohe Volumenströme und eine hohe Ansprechschnelligkeit des Sensors erreicht. Dabei besitzt die koaxiale Kapillare darin einen runden Querschnitt von typischerweise 1 bis 2 mm, kann aber - je nach Anwendung - auch größer oder kleiner dimensioniert werden. Auch der Kontrollraum hat damit diese maximale Größe.

Die Messzelle ist koaxial in einem zylindrischen Gehäuse untergebracht und das Medium strömt durch eine stirnseitige Öffnung in die Kapillare ein und verlässt am Ende der Kapillare senkrecht zur Zylinderwand des Gehäuses durch einen Kanal. Das Gehäuse ist vorzugsweise so ausgeführt, dass es in eine Normbohrung eines hydraulischen Gerätes einsetzbar ist.

Während für viele Sensoren wie z.B. Druck- oder Temperatursensoren prinzipbedingt diese Bauform naheliegt, weil das eigentliche Sensorelement problemlos eine mit dem Gehäuse koaxiale Ausrichtung ermöglicht oder sogar erfordert, steht der bei dem Stand der Technik entsprechenden Lösungen dieser Ausführungsform grundsätzlich entgegen, weil es zu extrem großen Dimensionen führen würde, weil die fluidische Achse (x-Achse), die koaxial mit der Hauptachse des Gehäuses liegen muss, mit der relativ langen optischen Achse (z-Achse) kreuzt. Damit wird die Länge der optischen Achse zum primären Faktor für den minimal erreichbaren Durchmesser zuzüglich erforderlichem Bauraum für elektronische und mechanische Komponenten und eine ausreichend druckstabile Gehäusewand, deren absolute Dicke mit zunehmendem Gesamtdurchmesser ebenfalls ansteigt. Ein weiterer limitierender Faktor besteht in der Notwendigkeit bei hohen fluidischen Drücken, eine entsprechend druckstabile und damit dicke transparente Abtrennung der Kapillare von den nicht druckfesten Komponenten des Sensors vorzusehen.

Die zylindrische Form, bei welcher der Bereich von Ein- und Auslass des Fluids mit einer Dichtung abgetrennt wird, ist am dem konzentrisch angeordneten Einlass gegenüberliegenden Ende mit einem zur Befestigung dienenden Außengewinde versehen, an welches eine zur Hauptachse stehende Planfläche anschließt, die als Anschlag und Tiefenbegrenzung beim Einschrauben in den Einbauraum dient. Im Bereich dieser Anschlagfläche ist ein Gewindefreistich angebracht, der so ausgestaltet ist, dass er zur Aufnahme einer Dichtung geeignet ist, die den Einbauraum mit montiertem Sensor nach außen abdichtet. In einer weiteren bevorzugten Ausführung wird in die Anschlagfläche konzentrisch eine ringförmige Vertiefung eingebracht, die zur Aufnahme eines entsprechenden Dichtringes dient. In einer weiteren Ausführung wird die Anschlagfläche mit einer ringförmigen Erhöhung mit einer scharfkantigen Ausgestaltung des Scheitels versehen, die eine Ringschneide bildet, die beim Einbauen des Sensors zu einer zuverlässigen Abdichtung ohne Dichtelement direkt auf der planen Gegenfläche des Einbauraumes führt.

An die Anschlagfläche folgt ein Antriebselement mit dem die kraftschlüssige Montage des Sensors im Einbauraum erfolgt. In einer bevorzugten Ausführung der erfindungsgemäßen Lösung weist das Antriebselement einen regelmäßigen polygonförmigen, vorzugsweise sechseckigen Querschnitt auf.

In einer weiteren vorteilhaften Ausführung, wo es auf besonders platzsparende Dimensionen ankommt, ist der Antrieb ausgestaltet in Form einer auf einer zylindermantelförmigen Oberfläche eingebrachter Verzahnung in axialer Richtung. Damit kann trotz geringer Verzahnungstiefe mit einem in axialer Richtung aufsteckbaren und mit dem entsprechenden Gegenprofil ausgestatteten Werkzeug ein hohes Drehmoment zur kraft- und formschlüssigen Montage übertragen werden.

Am äußersten Ende des Sensors befindet sich hinter dem Antrieb der elektrische Anschluss in Form eines fest verbundenen Kabels, vorzugsweise ausgeführt nach einem bekannten Vorschlag oder in Form einer lösbaren Verbindung, vorzugsweise als Stecker.

Optional ist eine optische Anzeige vorgesehen, die in einer bevorzugten Ausführung ausgeführt ist als Lichtleiter, der von einer handelsüblichen ein- oder mehrfarbeigen LED ausgehende Lichtstrahlung mittels asphärischer Linsenfläche achsparallel ausrichtet und an dessen anderen Ende der Lichtaustritt mittels rotationssymmetrischen Prismas in Kegelform seitlich umgelenkt wird.

Die interne Verschaltung der funktionellen fluidtechnischen Bestandteile erfolgt mittels durch Bohren eingebrachter Ölkanäle, die erfindungsgemäß derart an ihrer nach außen offenen Seite verschlossen werden, indem ein vorzugsweise metallischer (aber auch aus anderen Materialien bestehender) Stopfen, der an seinem Kopf eine ununterbrochene Ringförmige Schneidkante aufweist in eine Gewindebohrung eingeschraubt wird, die das entsprechende Innengewinde aufweist und im Bereich zur Außenfläche eine kegelförmige Senkung eingebracht ist, die einen größeren Spitzenwinkel aufweist, als der konische Kopf des Stopfens.

In einer alternativen Ausgestaltung kann auch die Gewindebohrung im Übergangsbereich zwischen Kegelsenkung und Gewinde zylindrisch aufgebohrt werden mit einem Mindestdurchmesser, der dem Gewindedurchmesser entspricht, so dass ebenfalls das Kollisionsvolumen entfernt wird und eine Ringschneide entsteht, welche nach dem gleichen Prinzip wie vor eine gasdichte Abdichtung herstellt.

Durch das vollständige Eindrehen des Stopfens wird die ringförmige Schneidkante auf ihrem gesamten Umfang in Kontakt mit dem Innenkegel der Senkung der Bohrung gebracht und nachdem das Drehmoment auf einen bestimmbaren Maximalwert erhöht wurde entsteht eine gasdichte metallische Verbindung zwischen Stopfenkopf und Kegelsenkung, womit die Bohrung fest verschlossen wird. In einer bevorzugten Ausführung besteht der Antrieb des Stopfens aus einer Bohrung, in die ein Innensechskant, ein Vielzahnprofil o.ä. eingebracht ist, was eine bündige Montage des Stopfens ermöglicht. In einer weiteren bevorzugten Ausführung wird ein Antriebskörper mit einem sich verjüngenden Zapfen mit dem kegelförmigen Schraubenkopf verbunden/aus einem Stück gefertigt, der beim erreichen eines durch die Dimensionierung in Verbindung mit der materialspezifischen Scherfestigkeit vorgebbaren maximalen Drehmomentes abschert und damit die Verbindung unlösbar macht. Lösungen solcher Dichtstopfen nach dem technischen Stand (DE8137093) sind so ausgeführt, dass das Bolzengewinde kurz vor oder im Kegel des Stopfens ausläuft und damit eine Materialkollision hervorgerufen wird, die ein sicheres Abdichten trotz Erreichen des vorgesehenen Maximaldrehmoments verhindert und weshalb diese Stopfen zusätzlich mit Dichtmasse oder Kleber abgedichtet und gesichert werden müssen. Diese Kleber sind jedoch nicht gasdicht und unterliegen Alterung und Unbeständigkeit gegenüber verschiedener Medien, so dass diese Probleme mit der erfindungsgemäßen Lösung behoben sind.

Zur Bestimmung des Medienzustands werden auch der Druck und die Temperatur des Mediums in der Kapillare ausgewertet. Dazu ist eine Druckmessvorrichtung vorgesehen, die durch Bohrungen mit der Kapillare verbunden ist und den Druck des Mediums in der Kapillare misst. Die Druckmessvorrichtung kann mit Dehnungsmessstreifen oder ähnlichem aufgebaut sein. Eine Temperaturmessvorrichtung ist in die Partikelmessvorrichtung integriert.

Bei der erfindungsgemäßen Vorrichtung werden die elektromagnetischen Wellen durch Lichtquellen erzeugt. Deren Wellenlänge bestimmt dabei die untere Nachweisgrenze der Größe eines diskreten Partikels. Für erfindungsgemäße Anwendungen mit Partikeln deutlich unterhalb der Wellenlänge werden die Detektoren im für die jeweilige Detektion der durch sie erzeugten Raleigh-Strahlung entsprechenden Winkel zur optischen Hauptachse der Lichtquelle angeordnet. In einer bevorzugten Ausführung wird diese Anordnung durch ein sog. Sensorarray erreicht, bei dem die einzelnen Sensoren vorzugsweise auf einem Halbleiterchip in einer (1D) oder mehreren Reihen (2D) flächig angeordnet sind. Die Detektoren bestehen vorzugsweise aus optoelektronischen Halbleitern, z.B. Fotodioden, deren Empfindlichkeit im gleichen Wellenlängenbereich liegt wie die der Lichtquelle. Diese wird vorzugsweise ebenfalls mit einem optoelektronischen Halbleiter wie z.B. einer Licht emittierenden Halbleiterdiode dargestellt. Diese kann sowohl inkohärentes als auch kohärentes Licht emittieren.

Der überschüssige Bereich der Licht emittierenden Fläche der Lichtquelle wird mit einer entsprechend ausgeformten Blende abgedeckt. Die Blende ist zur Lichtquelle hin reflektierend für diese Wellenlänge ausgestaltet und somit wird die Lichtdichte im Halbleiter erhöht. Dadurch wird nur ein Teil der Photonen direkt absorbiert und führt infolgedessen zur Erhöhung der Lichtdichte am Blendenaustritt. In einer bevorzugten Ausführung der Blende wird diese direkt auf den Halbleiter aufgebracht und ist zusätzlich auf der anderen Seite mit einer Licht absorbierenden Schicht überzogen, damit Streulicht verringert wird.

Die der vorliegenden Erfindung zugrundeliegende optische Strahlformung geht im Idealfall von einem linienförmigen Querschnitt von nur einer Wellenlänge, also z.B. 1μm, breiten Linie aus. Dabei gilt für Partikel die kleiner sind als diese Linienbreite die Gleichung für die maximale Signalhöhe S=ad². Für größere Partikel gilt eine lineare Beziehung.

Dies hat zur Folge, dass bei der Annahme des kleinsten Partikels mit 1μm Durchmesser sich alleine durch die Ausnutzung des linearen Kennlinienbereichs ein Messbereich von mindestens 60dB ergibt. Demnach ist der Messbereich 1-1.000μm, also mehr als das 30-fache herkömmlicher Sensoren.

Gleichzeitig bewirkt die linienförmige Kontrollraumkontur eine Minimierung dessen Volumens, was die diskret auswertbare Partikeldichte erheblich erhöht.

In einer anderen Ausführung ist der Kontrollraum in Richtung der optischen Achse zur Verringerung der Schärfentiefe und in Bildebene in Richtung der y-Achse im Bereich des Koordinatennullpunktes zur Verbesserung der Koinzidenzdichte eingeschnürt, vorzugsweise in hyperbolischer Form.

In einer weiteren Ausführung ist der Kontrollraumquerschnitt rechteckig mit minimaler Breite. Dieser Querschnitt ist dadurch gekennzeichnet, dass er senkrecht zur Strömungsrichtung die Kapillare weitgehend ausfüllt und in Strömungsrichtung möglichst schmal ist. Dabei soll er mindestens so weit verschmälert werden, dass kein Bereich konstanter Lichtintensität mehr vorherrscht, sondern nur noch ein Kanteneffekt, d.h. dass ein inhomogenes Feld vorhanden ist. Dies bedeutet einen frühen Übergang der Kennlinie vom parabolischen in den linearen Bereich. Dies wird erfindungsgemäß erreicht durch die in der Tiefe scharfe Abbildung der Lichtquelle im Kontrollraum in Strömungsrichtung, vorzugsweise mit maximaler Breite vom Lambda der betreffenden Wellenlänge.

Der Kontrollraum kann durch eine gezielte Ausnutzung der Schärfentiefe der Sende und/oder der Empfangsoptik segmentiert werden, Segmentierungsblenden sind dabei jeweils auf gleicher optischer Achse angeordnet. Damit wird die Auswertedichte weiter erhöht. Der Kontrollraum wird dabei wie gehabt linienförmig ausgeleuchtet und die optische Achse der Empfangsoptik lotrecht (also in Strömungsrichtung) ausgerichtet. Eine vergrößerte Abbildung erfolgt dazu vorzugsweise durch eine Reduktion der Kontrollraumtiefe und mit der Blende wird die Kontrollraumtiefe eingestellt (große Blendenöffnung = geringe Kontrollraumtiefe). Den jeweiligen Objektbereichen in der Objektebene (Segment) wird auf der Bildseite der Optik ein Detektorelement zugeordnet.

Die Gesamtfläche der durch Projektion entstehenden Abschattung kann leicht durch nachfolgende Integration der Signalform berechnet werden, wobei die Zeitachse entsprechend skaliert werden muss. Dazu wird mit einem geeigneten Verfahren oder/und mit einer geeigneten Einrichtung die Durchflussmenge je Zeiteinheit festgestellt und daraus die Geschwindigkeit des Partikels berechnet, anhand derer die erforderliche Korrelation von Zeit und Länge hergestellt werden kann.

Zum deutlich verbesserten Messbereich kommt noch hinzu, dass durch eine Integration das Messsignal praktisch unbegrenzt lange, also faserförmige Partikel erkennen und darstellen kann. Dadurch wird die Messbereichsdynamik bezogen auf einen vorgegebenen Aquivalenzdurchmesser noch weiter gesteigert.

Die Auswertung der Signale des Sensors weist einen Integrator zur Signalstabilisierung mit einem Abtast-Halteglied auf. Dies bewirkt, dass Istwerte für die Regelung nur dann gemessen werden, wenn kein Partikel den Kontrollraum passiert. Dies vermeidet die bei sonst üblicher Ausführung der Regelung über einen einfachen Integrator die globale Erhöhung der Lichtintensität und damit die Verfälschung der Signalhöhe bei großen Partikeldichten, welche sonst zu einer allgemeinen Signalanhebung und damit zu einer Verschiebung des Messbereichs führen würde.

Die Kalibrierung erfolgt mittels rückführbarer Normale, die so aufgebaut sind, dass auf einem für die zur Anwendung kommende optische Strahlung als auch für die magnetischen Wechselfelder transparenten Träger Mikrostrukturen lithografisch aufgebracht werden, die im Größenbereich und Form der zu detektierenden Partikel und der Vergleichsgrößen (Vergleichskreis gleicher Fläche, Vergleichskugel gleichen Volumens) entsprechen, sowie einiger Kontrollstrukturen mit denen die charakteristischen Feldparameter innerhalb des Kontrollraumes zur Justage ermittelt werden können. Die eigentliche Kalibrierung erfolgt durch translatorische und/oder rotatorische Bewegungen des Kalibriernormales mit seinen Strukturen durch den Kontrollraum hindurch, wobei genau definierte Wechselwirkungen auftreten, die eine Kalibrierung der dadurch erzeugten elektrischen Sensorsignale ermöglichen.

Bei einer weiteren Ausführung mit integriertem Bildsensor, ist auf dem Substrat des Normals eine ein- oder mehrzeilige Bildsensorstruktur aufgebracht mit dem der Kontrollraum bezüglich der Verteilung der Lichtintensität vermessen wird. Durch eine Nanopositionierung werden erheblich unter der Pixelgröße liegende Auflösungsschritte erreicht. Insbesondere wird dabei der Grenzbereich des Übergangs zwischen den Pixeln ausgenutzt, indem das Differenzsignal benachbarter Pixel ausgewertet wird.

An der Spitze des Kalibriernormals ist optional ein mechanisches Element angebracht, das die Kapillare formschlüssig elastisch abdichtet und durch seine Vorwärtsbewegung das in der Kapillare und insbesondere im Kontrollraum vorhandene undefinierte Medium verdrängt. Optional wird durch die Kalibriervorrichtung hochreines Medium nach geführt. Damit ist gewährleistet, dass der Kalibriervorgang nicht durch etwaige vorhandene Partikel gestört oder verfälscht wird.

Für die Kalibrierung ist eine Kalibrierstation vorgesehen, in die der Sensor eingesetzt wird. In dieser wird das Kalibriernormal in definierten Höhen in die Kapillare eingeführt. Dazu dient vorzugsweise ein Piezomotor.

Zur Erläuterung der Erfindung sind Ausführungsbeispiele in den Figuren dargestellt. Es zeigen:

Fig. 1 ein Prinzipbild des Sensors;

Fig. 2 einen prinzipiellen Querschnitt des Sensors;

Fig. 3 eine Außenansicht des Sensors;

Fig. 4 einen Querschnitt durch einen einfachen Sensor;

Fig. 5 einen Querschnitt durch einen erweiterten Sensor;

Fig. 6 ein Intensitätsdiagramm des Lichtes im Kontrollraum;

Fig. 7 ein Diagramm der Auswertespannungen an den optischen Detektoren;

Fig. 8 ein Prinzipschaltbild eines Prüf- und Messsystems;

Fig. 9 die Diagramme der Kontaminationsgrade in einem Prüf- und Messsystem;

Fig. 10 ein Prinzipschaltbild eines Hydrauliköl-Reinigungssystems;

Fig. 11 Diagramme zu dem Hydrauliköl-Reinigungssystem;

Fig. 12 ein Diagramm zum Warnbereich abhängig vom Durchmesser und der Konzentration der Partikel;

Fig. 13 ein Kalibriernormal.

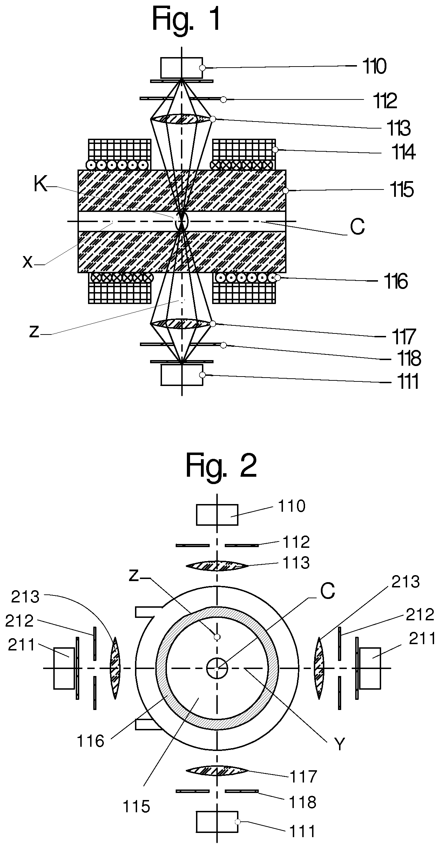

In Fig. 1 ist der prinzipielle Aufbau des Sensors schematisch dargstellt.

Für den optischen Teilsensor wird die Lichtquelle 110, die in einer besonders vorteilhaften Ausgestaltung linienförmig ist, mittels eines Objektivs 113 auf die Bildebene projiziert, die in Richtung der optischen Achse z mit der Längsachse der Kapillare kreuzt. Dabei ist die Längsachse y der linienförmigen Lichtquelle 110 parallel zur y-Achse der Bildebene und orthogonal zur Längsachse der Kapillare ausgerichtet. Die x-Achse der Bildebene ist koaxial mit der Längsachse der Kapillare ausgerichtet. Das optische System des optischen Detektors 111 ist mit den gleichen Komponenten Blende 118 und Linsen 117 ausgestattet wie das optische System der Lichtquelle 110.

Der magnetische Detektor setzt sich aus zwei Differentialspulen 116 zusammen, die koaxial auf den Messzylinder 115 aufgebracht sind. Diese werden nach außen jeweils über einen Ringkern 114 abgeschirmt. Die Differentialspulen 116 erzeugen ein magnetisches Wechselfeld, dessen Veränderung durch das Passieren von magnetisierbaren oder elektrisch leitfähigen Partikeln durch den Kontrollraum K ausgewertet wird.

In Fig. 2 ist ein Querschnitt durch den Messzylinder mit zwei Streulichtdetektoren 211 dargestellt. Das optische System der Streulichtdetektoren 211 ist mit den gleichen Komponenten Blende 212 und Linsen 213 ausgestattet wie das optische System der Lichtquelle 110. Über die Streulichtsensoren werden spiegelnde Oberflächen von Partikeln oder Blasen in dem Medium erfasst und ausgewertet.

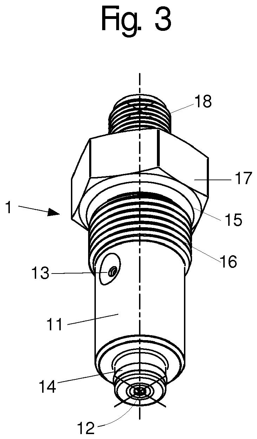

Fig. 3 zeigt eine Außenansicht des Sensors 1 mit seinem zylindrischen Sensorkörper 11. An diesem ist unten koaxial der Einlass 12 für das Medium angebracht. Der Auslass 13 für das Medium ist seitlich angeordnet.

Der Sensor 1 wird mit dem Schraubgewindes 16 in eine Normbohrung eines Gerätes mittels des Antriebs 17 eingeschraubt und über die Dichtungen 14 und 15 abgedichtet. An dem äußeren Ende des Sensors 1 befindet sich sein elektrischer Anschluss.

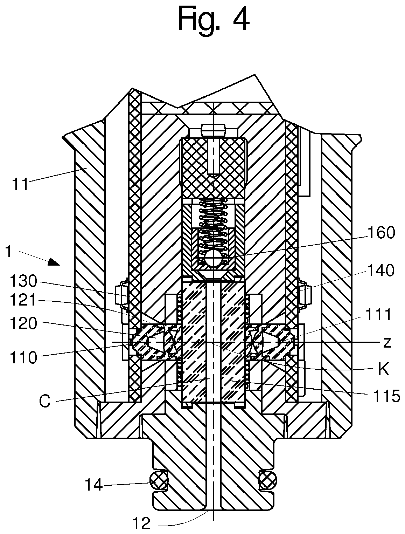

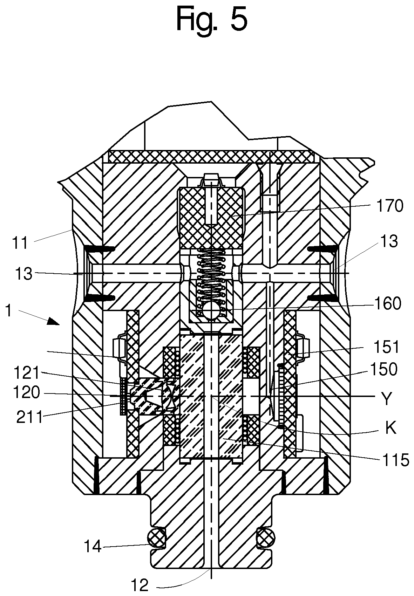

In den Fig. 4 und 5 ist jeweils ein Schnitt durch einen Sensor 1 gezeigt. In dem mittels der Dichtung 14 abgedichteten Sensorkörper 11 ist koaxial der Messzylinder 115 untergebracht, in dem sich die Kapillare C befindet. In diese wird über den Einlass 12 das Medium in den Kontrollraum K hineingeleitet.

In Fig. 4 ist die Hauptlichtrichtung mit der optischen Achse Z dargestellt, die durch den Kontrollraum K läuft. Auf einer Seite ist die Lichtquelle 110 mit einer Zerstreuungslinse 120 und einer Sammellinse 121 angeordnet. Gegenüber liegt der erste optische Detektor 111, der die gleiche Linsenanordnung besitzt. Die Lichtquelle 110 wird über die Lichtsteuerungsplatine 130 angesteuert und der erste optische Detektor 111 über die Lichtauswerteplatine 140.

In Fig. 5 ist die Streulichtrichtung mit der optischen Achse Y dargestellt, die zu einem Streulichtdetektor 211 führt. Dieser besitzt die gleiche Linsenanordnung mit der Zerstreuungslinse 12 und der Sammellinse 121. wie die Lichtquelle.

Wesentliches Merkmal für die Miniaturisierung einer als zylinderförmig ausgestalteten Bauform des Sensors 1 ist der verkürzte Abstand zwischen Lichtquelle 110 (Gegenstandsebene) und Beleuchtungsmaximum im Kontrollraumzentrum K (Bildebene), weil diese Baugröße diametral zur Symmetrieachse des zylinderförmigen Sensors 1 ausgerichtet ist und damit direkt den Durchmesser bestimmt. Der Abstand des Gegenstands zum Bild (Projektionsabstand) setzt sich bei einem abbildenden System mit einem reellen Bild aus den Teilabständen Gegenstand zur Hauptebene H des Objektivs (Gegenstandsweite) und dem Abstand des Bildes zur Hauptebene H (Bildweite) zusammen, wobei sich die Abstände reziprok zum Abbildungsmaßstab verhalten. $1/g+1/b=1/f$, wobei $ß=B/G$. (1) Eine Einschränkung ist dadurch gegeben, dass die Bildweite hauptsächlich durch die Dicke der druckstabilen Wandung des Messzylinders 115 zur Kapillare C hin bestimmt wird und vom vorgesehenen maximalen Druck bestimmt wird, mit dem der Sensor betrieben werden soll.

Eine vorteilhafte Ausführung der Wandung des Messzylinders 115, die optisch transparent sein muss, für Licht im angewendeten Wellenlängenbereich von Infrarot bis Ultraviolett wird dadurch erreicht, indem sie aus thermisch oder chemisch vorgespanntem Glas hergestellt wird. Damit die Konstruktion symmetrisch bleibt und zur Erreichung geringer Herstellkosten möglichst viele Gleichteile entstehen, wird als abbildendes System für den Detektor 111 das Projektionssystem der Lichtquelle 110 verwendet, indem die Gegenstand- und Bildebene ausgetauscht wird. Um die zur Miniaturisierung erforderliche Verkürzung des Abstandes zu erreichen, wird eine neuartige Objektivkonstruktion gewählt, die eine signifikante Verlagerung der Hauptebene in Richtung der Bildebene bewirkt. Dies wird erreicht, indem zunächst mit einer Zerstreuungslinse 120 ein aufrechtes virtuelles Zwischenbild erzeugt wird, das in z-Richtung vor dem Gegenstand/Objekt liegt und damit näher, jedoch stark verkleinert als das Objekt von der Hauptebene entfernt ist. Dieses virtuelle Zwischenbild wird über mindestens eine Sammellinse 121 umgekehrt auf die Bildebene projiziert, wobei die Abbildungsgleichung (1) mit der Gegenstandsweite für das virtuelle Zwischenbild arbeitet.

In einer besonders vorteilhaften Ausgestaltung der vorgeschlagenen Lösung wird eine Verkleinerung der Abbildung der Lichtquelle im Kontrollraum K angestrebt, weil so die optisch aktive Fläche, der Lichtquelle, welche vorzugsweise eine lichtemittierende Halbleiterstruktur ist, vergrößert werden kann, und so ein insgesamt höherer Lichtstrom erzeugt werden kann, bei gleichbleibender Stromdichte im Halbleiterkristall welche grundsätzlich limitiert und zusätzlich bestimmend für dessen Lebensdauer ist. Hinzu kommt, dass gröbere Halbleiterstrukturen einfacher herzustellen sind und eine hohe Ausbeute bringen und damit zu geringen Stückkosten führen.

Das Linsensystem besteht aus Linsen der Lichtquelle 110 und Linsen des optischen Detektors 11. In einer Ausgestaltung wird der Halbleiterchip der Lichtquelle 110 mit der ersten Fläche einer Zerstreuungslinse 121 optisch verkittet, was erfordert, dass diese erste Fläche plan ausgeführt ist. Der Vorteil liegt sowohl in der Vermeidung zweier Übergänge von optischen Materialien mit stark unterschiedlichen Brechungsindizes und den damit verbundenen Lichtverlusten durch Reflexion und der Vermeidung der Verringerung der Leuchtdichte durch den Übergang des Lichtes vom Halbleitermaterial mit hohem Brechungsindex in ein Medium (GAS, Vakuum) mit niedrigem Brechungsindex, als auch in der gleichzeitigen hermetischen Abdeckung der Halbleiteroberfläche und der Ersparnis der damit sonst verbundenen zusätzlichen Kosten. Dies ist besonders wichtig für den Übergang des Materials der Lichtquelle in das folgende Material, die in einer bevorzugten Ausführung aus Gallium-Arsenid als Basismaterial besteht, welches Brechungsindizes größer als 3 aufweist. Ein weiterer wesentlicher Einflussfaktor für die Erzielung einer möglichst geringen optischen Baulänge ist eine geringe Brennweite des optischen Systems bei gleichzeitig hoher MTF, die vorzugsweise rein beugungsbegrenzt ist, über die gesamte Bildhöhe.

In einer bevorzugten Ausführung wird dies erreicht durch die Verwendung von mehr als einer Sammellinse 121 hinter der Zerstreuungslinse 120, die das umgekehrte reelle Bild aus dem aufrechten virtuellen Zwischenbild erzeugt.

In einer weiteren vorteilhaften Ausgestaltung der vorgeschlagenen Lösung wird die letzte optisch wirksame Fläche der letzten Sammellinse 121 des Objektivs vor der Zylinderfläche der rohrförmigen Wandung des Messzylinders 115 planar ausgeführt und der Zwischenraum zu dieser Fläche und der rohrförmigen Wandung mit einem optisch transparenten Material ausgefüllt, das den gleichen oder annähernd gleichen Brechungsindex aufweist, wie das Material aus dem die Rohrwand besteht, vorzugsweise ein unter Licht- und/oder Wärmeeinwirkung aushärtendes Polymer. Bedingt durch den angeglichenen Brechungsindex des Füllmaterials findet keine bzw. keine wesentliche Brechung an der Grenzfläche von Polymer und rohrförmigen Wandung statt. Ein weiterer Vorteil dieser Ausgestaltung besteht in der Vermeidung zweier optischer Übergänge von Luft zu höher brechendem Material (z.B. Glas), wodurch sich die Reflexionsverluste weiter reduzieren. Bei einem erfindungsgemäßen optischen Projektionssystem, das aus mindestens je einer Zerstreuungslinse 120 und aus mindestens je einer Sammellinse 121 besteht, beträgt die Anzahl an Übergängen Luft/Glas lediglich 2.

In einer weiteren vorteilhaften Ausgestaltung der vorgeschlagenen Lösung wird die Lichtquelle nur im Bereich der optischen Achse Z beugungsbegrenzt - also mit höchstmöglicher MTF - abgebildet und mit zunehmendem Abstand zur optischen Achse z in xy-Richtung mit kontinuierlich abnehmender MTF abgebildet, wobei die jeweilige Zone der höchsten MTF in z-Richtung stets in der Bildebene bleibt, die Bildebene also nicht gewölbt ist. Dies wird erreicht, indem vorzugsweise alle optischen Oberflächen - mit Ausnahme der planaren Flächen - als Asphären ausgebildet werden, die in einer weiteren Ausführung auch als Fresnel-Oberflächen oder aus GRIN-Material oder aus deren Kombinationen bestehen können. Der kontrollierte Abfall der MTF hat zur Folge, dass Partikel jeder Größe ihre maximale Abschattung und damit ihre jeweilige maximale Signalhöhe nur dann erreichen, wenn sie sich durch den Kontrollraum genau auf der x-Achse entlang mit dem Fluid bewegen.

In einer bevorzugten Ausführung dieser optischen Konstruktion folgt der Abfall der MTF in der Bildebene der Funktion $1/\sqrt{a^2 4 r^2 + 1}$, wobei r der Abstand von der optischen Achse z in der Bildebene ist und a größer oder gleich der Wellenlänge $\lambda$ des Lichtes der Lichtquelle 110 ist. Bei Verwendung eines linienförmigen Lambertstrahlers als Lichtquelle, wie es z.B. bei Halbleiterkristallen der Fall ist, ergibt sich für die Leuchtdichte in der Bildebene eine hyperbolisch-gaussförmige Strahlungsverteilung, wobei die Bildebene definiert ist durch die xy-Ebene des kartesischen Koordinatensystems mit Nullpunkt durch die z-Achse.

Dabei werden Partikel, die parallel zur, jedoch abseits der x-Achse den Kontrollraum K passieren ein abgeschwächtes Signal erzeugen, weil sie Regionen geringerer Leuchtdichte passieren, gegenüber dem maximalen Signal, dass sie erzeugen, wenn ihre Bewegungsbahn koaxial zur x-Achse verläuft. Trotz der variierenden Leuchtdichte besteht ein linearer Zusammenhang zwischen Partikelgröße und maximaler Signalhöhe im Ort x=0, y=0 und z=0, für Partikel, deren Durchmesser größer als a ist.

In einer weiteren vorteilhaften Ausgestaltung des erfindungsgemäßen Vorschlags werden nur solche Partikel zur Zählung berücksichtigt, deren Größe im linearen Kennlinienbereich ist und deren Verhältnis von maximaler Signalhöhe zur Laufzeit, gemessen bei 50% des Scheitelwertes zwischen einem vorzugsweise bei 25% des Verhältnisses der maximalen Signalhöhe zur Laufzeit liegenden Schwellwerts eine bestimmte einstellbare Untergrenze nicht unterschreitet. Dabei wird eine während des kurzen Signals konstante Strömungsgeschwindigkeit des Fluids und damit des Partikels im Kontrollraum K angenommen.

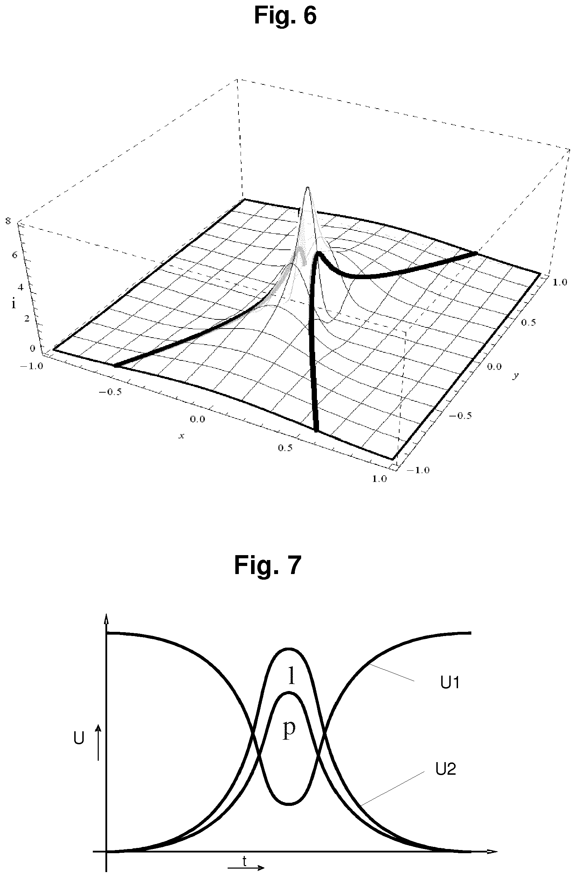

Eine Intensitätsverteilung i des Lichtes im Kontrollraum ist in Fig. 6 dargestellt, wobei die Mitte des Kontrollraum sich bei dem Punkt x=0.0 und y=0.0 befindet. Die Intensität i folgt einer hyperbolisch-gaußschen Intensitätsverteilung in der xy-Ebene nach der Formel

$$i = \frac{2e^{-\frac{x^2}{2\left(\frac{1}{2}\sqrt{a^2 + \frac{4y^2}{b^2}}\right)^2}}}{\sqrt{a^2 + \frac{4y^2}{b^2}}\sqrt{2\pi}} \quad (2)$$

wobei a der tangentiale Minimalabstand der Hyperbeln ist und b die Steigung der Asymptoten der Hyperbeln.

Fig. 7 zeigt Auswertespannungen U an den optischen Detektoren über die Zeit t bei Passieren eines Partikel p durch den Kontrollraum. Die Kurve U1 zeigt das Signal des ersten optischen Detektors. Ein Partikel p bewirkt eine Abschattung und damit eine abfallende und wieder ansteigende Kurve U1

Die Kurve U2 zeigt das Ausgangssignal eines Streulichtdetektors. Bei einem Partikel p wird ein Signal bis zu einer maximalen Höhe erzeugt, je nach Oberfläche des Partikels p. Wenn sich Luftblasen 1 in dem Medium befinden werden deutlich höhere Streusignale erzeugt. Somit lassen sich Partikel p und Luftblasen 1 unterscheiden.

Zur weiteren Charakterisierung der Partikel sind in der Ausführung des Sensors gemäß Fig. 5 noch eine Druckmessvorrichtung 150, ggf. kombiniert mit einer Temperaturmessvorrichtung, und eine Feuchtemessvorrichtung 170 eingebaut. Die Feuchtemessvorrichtung 170 wertet den Wassergehalt des Mediums durch Mikrowellenabsorption aus.

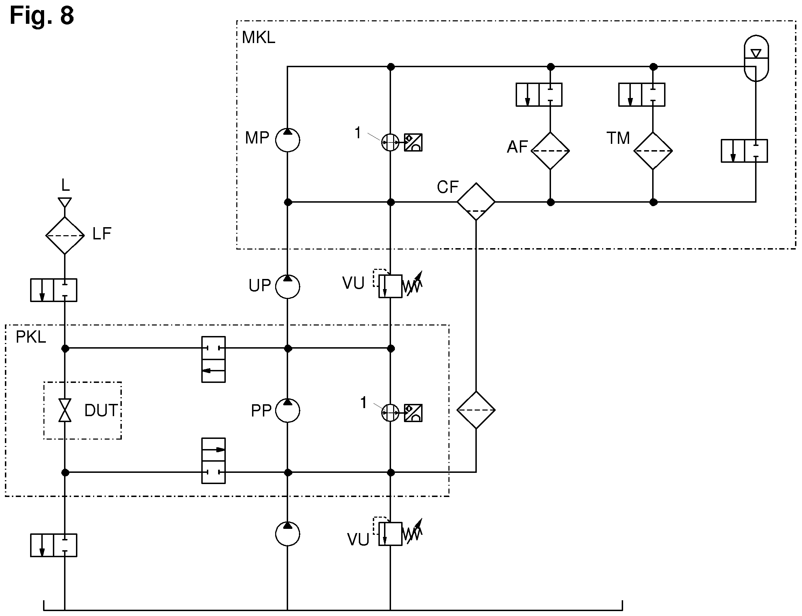

In Fig. 8 ist eine schematische Darstellung eines Prüfkreislaufes PKL und eines Messkreislaufes MKL gezeigt, die beide mit einem Sensor 1 ausgestattet sind. Der Prüfling DUT kann durch die Prüfpumpe PP mit dem Medium, typischerweise Hydrauliköl, durchflossen werden. Dabei liegt der Sensor 1 in einem Nebenschluss zur Prüfpumpe PP und analysiert die Kontamination des den Prüfling DUT durchströmenden Öls. Durch eine entsprechende Einstellung der Ventile kann das Medium mittels der Übertragungspumpe UP aus dem Prüfkreislauf PKL in den Messkreislauf MKL überführt werden. In dem Messkreislauf kann dann das Öl mittels der Messpumpe MP durch das Querstromfilter CF gedrückt werden, wobei die so umströmende Suspension aus Öl und Partikeln, die aus dem Prüfkreislauf stammen, kontinuierlich aufkonzentriert wird. Dabei ist auch hier der Sensor 1 im Nebenschluss zu der Messpumpe MP angeordnet und kann die so umströmende Suspension überprüfen. Nachdem die Partikelkonzentration im Messkreislauf einen bestimmten extrapolierbaren Grenzwert erreicht hat, der in Relation zum umströmenden Fluidvolumen dem Kontaminationsgrad des Prüflings DUT entspricht, ist der Messzyklus abgeschlossen. Die Suspension wird danach durch entsprechende Umsteuerung der Ventile durch den Absolutfilter AF geleitet und so dem Kreislauf vollständig entzogen. Es ist auch möglich, das Medium durch eine Test-Membran TM zu drücken. Dort bleiben dann alle Partikel auf dem Filter TM zurück und können extern dokumentiert werden. Während in den Filtern die Partikel aus dem Hydrauliköl genommen werden, nimmt die Kontamination entsprechend ab. Das gereinigte Hydrauliköl kann dann, nach entsprechender Einstellung der Ventile, über das CF-Filter wieder in den Prüfkreislauf PKL zurückgedrückt werden. Alle Pumpen sind bei einer Blockade in den Kreisläufen durch ein Überdruckventil UV geschützt.

Der Prüfling DUT kann bei einer entsprechenden Einstellung der Ventile nach Abschluss der Messung auch mit Luft L durchgeblasen werden. Dazu gelangt die Luft L über den Luftfilter LF durch den Prüfling DUT. Vorhandene Reste des Hydrauliköls werden dann in einen Tank abgeleitet.

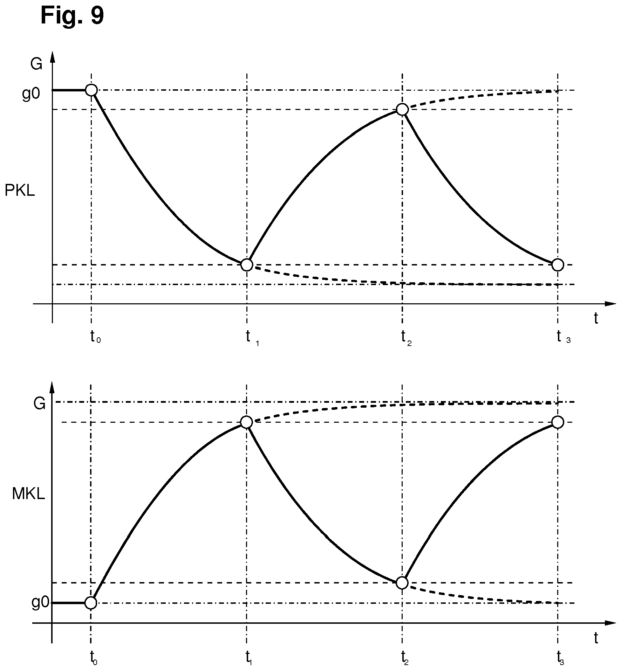

Der Verlauf des Kontaminationsgrades G in dem Prüfkreislauf PKL und dem Messkreislauf MKL über der Zeit t ist in Fig. 9 dargestellt. Im Prüfkreislauf PKL ist zunächst ein hoher Ausgangswert g0 des Kontaminationsgrades G vorhanden, der durch die Kontamination des Prüflings eingebracht wird. Wenn nun das Medium aus dem Prüfkreislauf in den Messkreislauf übertragen und durch abgereinigtes Medium aus dem CF-Filter ersetzt wird, nimmt der Kontaminationsgrad G im Prüfkreislauf PKL ab. Parallel dazu ist in dem Messkreislauf MKL der Kontaminationsgrad G zunächst auf einem niedrigen Wert g0 und steigt an. Nachdem durch Extrapolation des zeitlichen Verlaufs der maximale Kontaminationsgrad im Prüfkreislauf hinreichend genau erkennbar wird, ist die Messung vorbei und die Ventile werden so über die Filter Af oder TM umgesteuert, dass der Kontaminationsgrad G im Messkreislauf MKL abnimmt. Dieser Wechsel wird weiter fortgesetzt.

Zur besseren Veranschaulichung der Vorgänge kann dieser auf einer Anzeige mit einer nichtlinearen Zeitachse dargestellt sein.

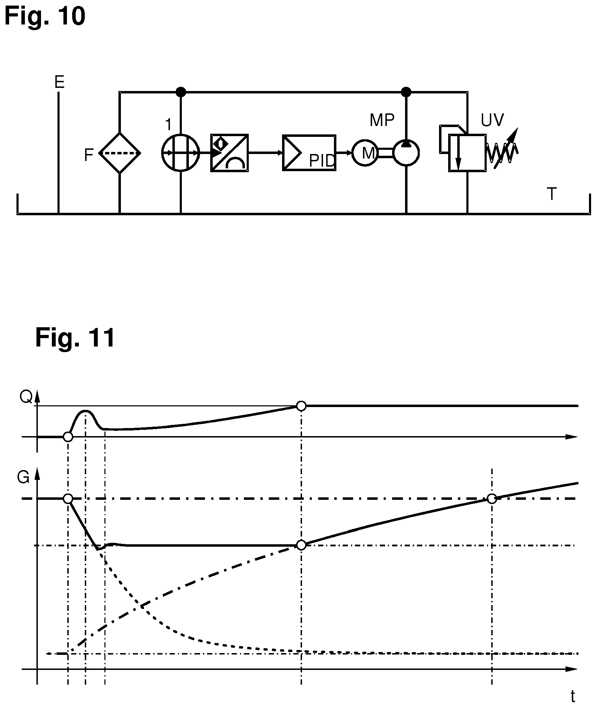

In Fig. 10 ist die Anwendung des Sensors 1 in einer Reinigungsvorrichtung dargestellt. Aus dem Tank T wird über die Messpumpe MP das Medium durch das Filter F gedrückt, damit gereinigt und wieder in den Tank T geleitet. Im Nebenschluss zu der Messpumpe MP und dem Filter F liegt der Sensor 1, der den Kontaminationsgrad G im Kreislauf überprüft. Abhängig von dem Kontaminationsgrad G wird über den Regler PID der Motor der Messpumpe MP gesteuert. Auch hier ist die Messpumpe MP durch ein Überdruckventil UV geschützt. Ein gereinigtes Medium kann über die Entnahmeleitung E dem Tank T entnommen werden.

In Fig. 11 ist der sich in der Reinigungsvorrichtung durch die Messpumpe MP ergebende Volumenstrom Q über dem Kontaminationsgrad G dargestellt. Der zunächst hohe Kontaminationsgrad G sinkt bis auf einen vorbestimmten, unkritischen Wert ab. Dann wird über den Regler dieser Wert konstant gehalten. Wenn der Volumenstrom nicht ausreicht, um die Kontamination abzubauen, steigt der Kontaminationsgrad wieder an. Ist dieser Zustand, welcher vom Sensor angezeigt wird, erreicht, muss ein Filterwechsel vorgenommen werden.

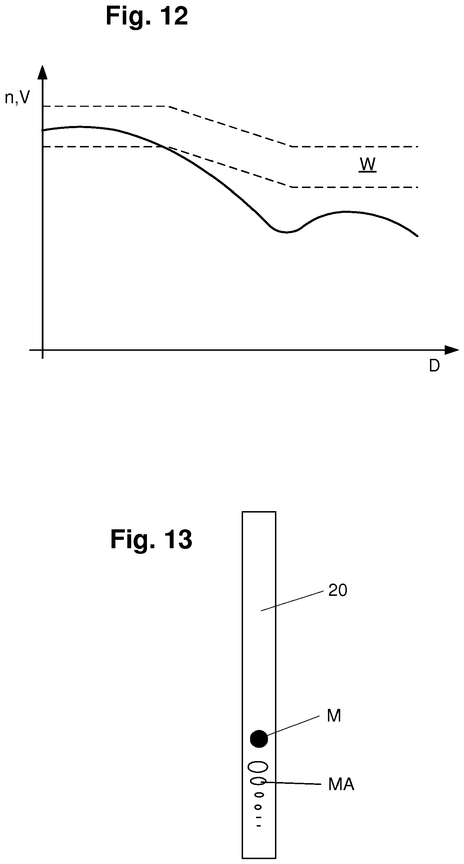

Fig. 12 zeigt ein Diagramm zur Veranschaulichung der Auswertung der Signale des Sensors. Vorteilhaft werden die Sensorsignale verstärkt und mittels eines Lautsprechers akustisch wahrnehmbar gemacht. Das Sensorsignal kann dabei durch Transformation in den hörbaren Frequenzbereich eingepasst werden.

Es ist ein Warnbereich W eingetragen, der angibt, wann abhängig von dem Durchmesser D und der zugehörigen Konzentration der Partikel eine Warnung ausgegeben wird. Die Konzentration der Partikel kann anhand der Anzahl der Partikel mit dem entsprechenden Durchmesser D der Partikel oder dem Volumen V der gemessenen Partikel mit dem Durchmesser D bestimmt sein. Es sind aber auch andere Parameter wie die Summendurchmesser der Partikel oder deren Summenfläche nutzbar. In diesem Diagramm ist angenommen, dass bei kleinen Durchmessern D der Warnbereich erst bei größeren Anzahlen n oder einem größeren Volumen V anspricht, während er bei größeren Durchmessern der Partikel früher anspricht, weil etwa eine größere Gefahr der Blockierung eines Gerätes besteht. Dabei wird der Warnbereich W entweder neutral gehalten, oder einer beliebigen aber bestimmten Funktion folgend die Erfordernisse einer bestimmten Anlage hinsichtlich der für sie erforderlichen einzuhaltenden Kontaminationsgrenzen erfüllen.

Fig. 13 zeigt ein transparentes Kalibriernormal 20 mit unterschiedlichen Markierungen in definierten Höhen. Wenn nun das Kalibriernormal in den Kontrollraum des Sensors in einer definierten Höhe eingeführt wird, kann überprüft werden, wie der Sensor anspricht. So können unterschiedlich große optische Markierungen MA auf den Kalibriernormal eingeätzt sein. Auch metallische definiert reflektierende Markierungen M sind sinnvoll, da damit die Streulichtdetektoren überprüft werden können.

Bezugszeichen

| | |
|---|---|
| 1 | Sensor |
| 11 | Sensorkörper |
| 12 | Einlass |
| 13 | Auslass |
| 14 | innere Dichtung |
| 15 | äußere Dichtung |
| 16 | Einschraubgewinde |
| 17 | Antrieb |
| 18 | Elektrischer Anschluss |
| 20 | Kalibriernormal |
| 110 | Lichtquelle, LED |
| 111 | optischer Detektor |
| 112 | Blende |
| 113 | Linsen der Lichtquelle |
| 114 | Ringkern |
| 115 | Messzylinder |
| 116 | Differenzialspule |
| 117 | Linsen des optischen Detektors |
| 118 | Blende des optischen Detektors |
| 120 | Zerstreuungslinse |
| 121 | Sammellinse |
| 130 | Lichtsteuerungsplatine |
| 140 | Lichtauswerteplatine |
| 150 | Druckmessvorrichtung |
| 151 | Druckauswerteplatine |
| 160 | Druckregler |
| 170 | Dielektrische Feuchtemessvorrichtung |
| 211 | Streulichtdetektor |
| 212 | Blende des Streulichtdetektors |
| 213 | Linse des Streulichtdetektors |
| AF | Absolut-Filter |
| C | Kapillare |
| CF | CF-Filter |
| D | Durchmesser |
| DUT | Prüfling |
| E | Entnahmeleitung |
| F | Filter |
| G | Kontaminationsgrad |
| K | Kontrollraum |
| L | Luft |
| LF | Luftfilter |
| M | Metallische Markierung |
| MA | geätzte Markierung |
| MP | Messpumpe |
| MKL | Messkreislauf |
| PID | Regler |
| PKL | Prüfkreislauf |
| PP | Prüfpumpe |
| Q | Volumenstrom |
| PID | Regler |
| T | Tank |
| UP | Übertragungspumpe |
| UV | Überdruckventil |
| V | Volumen |
| W | Warnbereich |
| X | Längsachse der Kapillare |
| Y | Streulichtachse |
| Z | optische Achse |

g0     Ausgangswert der Kontamination
i       Lichtintensität
l       Luftblase
n       Anzahl
p       Partikel
t       Zeitkoordinate
x,      y Koordinaten des Kontrollraumes

**Patentansprüche**

1. Sensor zur Messung von Partikeln in kontaminierten Medien mit einer optisch durchlässigen Messzelle (115), durch die eine Kapillare (C) zur Durchleitung und Messung des Mediums hindurchführt, einem optischen Detektor und einem magnetischen Detektor, wobei

   - die Messzelle (115) zylinderförmig ist, in der die Kapillare (C) koaxial verläuft, und in deren Mitte ein Kontrollraum (K) angeordnet ist, auf den ein optisches Linsensystem mit einer Lichtquelle (110) und mindestens einem optischen Detektor (111) fokussiert ist,
   - die optische Achse (z) des Linsensystems senkrecht zur Kapillare (C) ausgerichtet ist
   - und auf dem Schaft der Messzelle (115) zwei zur Kapillare koaxiale Differenzialspulen (116) zur Erzeugung und Detektion eines koaxialen magnetischen Wechselfeldes den magnetischen Detektor bilden, die so angesteuert werden können, dass sich das magnetische Wechselfeld im Kontrollraum (K) aufhebt.

2. Sensor nach Anspruch 1, **dadurch gekennzeichnet, dass** die Kapillare (C) einen runden Querschnitt mit einem maximalen Durchmesser von 2 mm besitzt.

3. Sensor nach Anspruch 1, **dadurch gekennzeichnet, dass** er eine Druckmessvorrichtung (150) besitzt, die durch Bohrungen mit der die Kapillare (C) verbunden ist und den Druck des Mediums in der die Kapillare (C) misst.

4. Sensor nach Anspruch 1, **dadurch gekennzeichnet, dass** er eine Temperaturmessvorrichtung besitzt, die die Temperatur des Mediums in der die Kapillare (C) misst.

5. Sensor nach Anspruch 4, **dadurch gekennzeichnet, dass** die Temperaturmessvorrichtung in die Druckmessvorrichtung (150) integriert ist.

6. Sensor nach Anspruch 1, **dadurch gekennzeichnet, dass** die Messzelle (115) druckstabil ausgeführt ist.

7. Sensor nach Anspruch 1, **dadurch gekennzeichnet, dass** die Messzelle (115) koaxial in einem zylindrischen Gehäuse untergebracht ist und das Medium durch eine stirnseitige Öffnung in die die Kapillare (C) einströmt und am Ende der Kapillare senkrecht zur Zylinderwand des Gehäuses durch einen Kanal verlässt.

8. Sensor nach Anspruch 7, **dadurch gekennzeichnet, dass** er in eine Normbohrung eines hydraulischen Gerätes einsetzbar ist.

9. Sensor nach Anspruch 1, **dadurch gekennzeichnet, dass** das Linsensystem mindestens jeweils aus einer Zerstreuungslinse (120) und einer Sammellinse (121) besteht, die jeweils vor der Lichtquelle (110) und vor dem optischen Detektor (111) angeordnet sind.

10. Sensor nach Anspruch 1, **dadurch gekennzeichnet, dass** ein erster optischer Detektor (111) mit zugehörigem Linsensystem in der optischen Achse (z) angeordnet ist.

11. Sensor nach Anspruch 10, **dadurch gekennzeichnet, dass** mindestens ein weiterer Streulichtdetektor (11) senkrecht zu dem ersten optischen Detektor (111) mit zugehörigem Linsensystem angeordnet ist.

12. Sensor nach Anspruch 1, **dadurch gekennzeichnet, dass** die Lichtquelle (110) durch eine LED gebildet ist, die ein linienförmiges Licht abgibt.

13. Sensor nach Anspruch 12, **dadurch gekennzeichnet, dass** die LED mit einer Sammellinse (121) und einer Blende (112) kombiniert aufgebaut ist.

14. Sensor nach Anspruch 1, **dadurch gekennzeichnet, dass** die optischen Detektoren (111, 211) mit einer oder mehreren Photodioden und kombinierter Linse sowie Blenden aufgebaut sind.

15. Sensor nach Anspruch 1, **dadurch gekennzeichnet, dass** die beiden Differenzialspulen (116) mit entgegen gesetzten hochfrequenten Strömen erregt werden können, so dass im Zentrum des Kontrollraum (K) zu jedem Zeitpunkt die magnetische Feldstärke gleich Null ist.

16. Sensor nach Anspruch 1, **dadurch gekennzeichnet, dass** eine Feuchtemessvorrichtung (170) vorgesehen ist, die den Wassergehalt des Mediums durch Mikrowellenabsorption messbar macht.

17. Sensor nach Anspruch 1, **dadurch gekennzeichnet, dass** ein Kalibrierungsnormal (20) auf einem optisch und/oder magnetisch transparenten Träger vorgesehen ist, auf dem Mikrostrukturen lithografisch aufgebracht sind, die im Größenbereich und Form der zu detektierenden Partikel liegen.

18. Verfahren zur Messung von Partikeln (p) in einem Medium mit einem Sensor (1) nach einem der vorstehenden Ansprüche, **dadurch gekennzeichnet, dass**

    - das Medium mit einer definierten Durchflussmenge durch die die Kapillare (C) gepresst wird,
    - beim Passieren eines Partikels (p) durch den Kontrollraum (K) über den ersten optischen Detektor (111) ein Abbild des Partikels erfasst wird,
    - über den magnetischen Detektor erfasst wird, ob ein magnetisierbares Partikel vorliegt,
    - die Anzahl der erfassten Partikel (p) gezählt und
    - deren Größe bewertet wird.

19. Verfahren nach Anspruch 18, **dadurch gekennzeichnet, dass** über die Streulichtdetektoren (211) erfasst wird, ob Gasblasen in dem Medium eingeschlossen sind.

20. Verfahren nach Anspruch 18, **dadurch gekennzeichnet, dass** anhand der Stärke der an dem ersten optischen Detektor (111) gemessenen Signale bestimmt wird, ob Gasblasen in dem Medium eingeschlossen sind.

21. Verfahren nach Anspruch 18, **dadurch gekennzeichnet, dass** bei einem Übersteigen der erfassten Partikelanzahl (n) und/oder Größe in einer Zeiteinheit ein Warnsignal ausgegeben wird.

22. Verfahren nach Anspruch 18, **dadurch gekennzeichnet, dass** die Sensorsignale verstärkt und mittels eines Lautsprechers akustisch wahrnehmbar gemacht werden.

23. Verfahren nach Anspruch 22., **dadurch gekennzeichnet, dass** der Frequenzbereich des Sensorsignals durch Transformation in den hörbaren Frequenzbereich eingepasst wird.

24. Verfahren nach Anspruch 18, **dadurch gekennzeichnet, dass** die Darstellung der Messwerte auf einer Anzeige mit einer nichtlinearen Zeitachse erfolgt.

25. Verfahren nach Anspruch 18, **dadurch gekennzeichnet, dass** zum Kalibrieren des Sensors ein Kalibriernormal (20) in die Kapillare (C) eingeführt wird, das optische und/oder magnetische Markierungen (M, MA) auf einem optisch und/oder magnetisch transparenten Träger aufweist, die in dem Kontrollraum (K) solche optischen und/oder magnetischen Wirkungen wie Partikel erzeugen.

26. Verwendung eines Sensors nach einem der Ansprüche 1 bis 17, **dadurch gekennzeichnet, dass** er in einen Prüfkreislauf (PKL) für Hydraulikkomponenten eingesetzt ist und der Kontaminationsgrad (G) der Hydraulikkomponente bestimmt wird.

27. Verwendung eines Sensors nach einem der Ansprüche 1 bis 17, **dadurch gekennzeichnet, dass** er in einer Reinigungsvorrichtung für ein Hydraulikmedium eingesetzt ist.

**Claims**

1. A sensor for measuring particles in contaminated media, having an optically transparent measurement cell (115), through which a capillary tube (C) for conducting and measuring the medium passes, an optical detector, and a magnetic detector, **characterized in that**

    - the measurement cell (115) is cylindrical, in which measurement cell the capillary tube (C) extends coaxially,
    - and in the center of which measurement cell an inspection space measurement cell (K) is arranged, on which an optical lens system with a light source (110) and at least one optical detector (111) is focused,
    - the optical axis (Z) of the lens system is aligned perpendicular to the capillary tube (C)
    - and, on the shaft of the measurement cell (115), two differential coils (116), which are coaxial to the capillary tube, for generating and detecting a coaxial magnetic alternating field form the magnetic detector, which differential coils are actuated such that the magnetic alternating field in the inspection space (K) is canceled.

2. The sensor as claimed in claim 1, **characterized in that** the capillary tube (C) has a round cross section with a maximum diameter of 2 mm.

3. The sensor as claimed in claim 1, **characterized in that** it has a pressure measurement apparatus (150), which is connected to the capillary tube (C) via holes and measures the pressure of the medium in the capillary tube (C).

4. The sensor as claimed in claim 1, **characterized in that** it has a temperature measurement apparatus, which measures the temperature of the medium in the capillary tube (C).

5. The sensor as claimed in claim 4, **characterized in that** the temperature measurement apparatus is integrated in the pressure measurement apparatus (150).

6. The sensor as claimed in claim 1, **characterized in that** the measurement cell (115) is configured to be pressure-stable.

7. The sensor as claimed in claim 1, **characterized in that** the measurement cell (115) is accommodated coaxially in a cylindrical housing and the medium flows into the capillary tube (C) through a front-end opening and leaves at the end of the capillary tube perpendicular to the cylinder wall of the housing through a duct.

8. The sensor as claimed in claim 7, **characterized in that** it can be inserted into a standard hole of a hydraulic device.

9. The sensor as claimed in claim 1, **characterized in that** the lens system consists at least in each case of a diverging lens (120) and a converging lens (121), which are arranged in each case in front of the light source (110) and in front of the optical detector (111).

10. The sensor as claimed in claim 1, **characterized in that** a first optical detector (111) with associated lens system is arranged in the optical axis (z).

11. The sensor as claimed in claim 10, **characterized in that** at least one further scattered light detector (11) is arranged perpendicular to the first optical detector (111) with associated lens system.

12. The sensor as claimed in claim 1, **characterized in that** the light source (110) is formed by an LED which emits linear light.

13. The sensor as claimed in claim 12, **characterized in that** the LED is configured in combination with a converging lens (121) and a stop (112).

14. The sensor as claimed in claim 1, **characterized in that** the optical detectors (111, 211) are configured with one or multiple photodiodes and a combined lens and stops.

15. The sensor as claimed in claim 1, **characterized in that** the two differential coils (116) are excited with opposite radio-frequency currents such that at any time point the magnetic field strength in the center of the inspection space (K) equals zero.

16. The sensor as claimed in claim 1, **characterized in that** a moisture measuring apparatus (170) is provided, which makes the water content of the medium measurable by way of microwave absorption.

17. The sensor as claimed in claim 1, **characterized in that** a calibration standard (20) is provided on an optically and/or magnetically transparent carrier, on which microstructures are applied by lithography which are within the size region and form of the particles to be detected.

18. A method for measuring particles (p) in a medium with a sensor (1) as claimed in one of the preceding claims, **characterized in that**

    - the medium is squeezed through the capillary tube (C) at a defined flow quantity,
    - an image of the particle is captured when a particle (p) passes through the inspection space (K) via the first optical detector (111),
    - it is detected via the magnetic detector whether a magnetizable particle is present,
    - the number of the particles (p) detected is counted and
    - the size thereof is evaluated.

19. The method as claimed in claim 18, **characterized in that** it is detected via the scattered light detectors (211) whether gas bubbles are included in the medium.

20. The method as claimed in claim 18, **characterized in that** it is determined on the basis of the strength of the signals measured at the first optical detector (111) whether gas bubbles are included in the medium.

21. The method as claimed in claim 18, **characterized in that** a warning signal is output when the detected particle number (n) and/or size are exceeded in a unit time.

22. The method as claimed in claim 18, **characterized in that** the sensor signals are amplified and made acoustically perceivable using a loudspeaker.

23. The method as claimed in claim 22, **characterized in that** the frequency region of the sensor signal is fitted into the audible frequency region by transfor-

**24.** The method as claimed in claim 18, **characterized in that** the representation of the measurement values takes place on a display with a non-linear time axis.

**25.** The method as claimed in claim 18, **characterized in that** for calibrating the sensor, a calibration standard (20) is inserted into the capillary tube (C), which has optical and/or magnetic markings (M, MA) on an optically and/or magnetically transparent carrier, which produce in the inspection space (K) such optical and/or magnetic effects as particles.

**26.** The use of a sensor as claimed in one of claims 1 to 17, **characterized in that** it is inserted into a test circuit (PKL) for hydraulics components and the contamination degree (G) of the hydraulics component is determined.

**27.** The use of a sensor as claimed in one of claims 1 to 17, **characterized in that** it is inserted in a cleaning apparatus for a hydraulics medium.

**Revendications**

**1.** Capteur pour mesure de particules dans des fluides contaminés avec une cellule de mesure (115) optiquement transparente traversée par un capillaire (C) pour acheminer et mesurer le fluide, avec aussi un détecteur optique et un détecteur magnétique, **caractérisé par le fait**

- **que** la cellule de mesure (115) est de forme cylindrique, le capillaire (C) s'y étend de manière coaxiale,
- et **qu'**au milieu est disposé un local de contrôle (K) sur lequel est focalisé un système optique de lentilles avec une source lumineuse (110) et au moins un détecteur optique (111),
- **que** l'axe optique (z) du système de lentilles est aligné perpendiculairement au capillaire (C)
- et **que** sur l'armature de la cellule de mesure (115), deux bobines différentielles (116) coaxiales au capillaire, destinées à générer et détecter un champ magnétique alternatif coaxial, constituent le détecteur magnétique ; elles sont commandées de sorte que le champ magnétique alternatif dans le local de contrôle (K) s'annule.

**2.** Capteur selon revendication 1, **caractérisé par le fait que** le capillaire (C) possède une section transversale ronde avec un diamètre maximal de 2 mm.

**3.** Capteur selon revendication 1, **caractérisé par le fait**

**qu'**il possède un dispositif de mesure de pression (150) lié au capillaire (C) par des perçages et qui mesure la pression du fluide dans le capillaire (C).

**4.** Capteur selon revendication 1, **caractérisé par le fait**

**qu'**il possède un dispositif de mesure de température qui mesure la température du fluide dans le capillaire (C).

**5.** Capteur selon revendication 4, **caractérisé par le fait**

**que** le dispositif de mesure de température est intégré au dispositif de mesure de pression (150).

**6.** Capteur selon revendication 1, **caractérisé par le fait**

**que** la cellule de mesure (115) est exécutée avec une stabilité de pression.

**7.** Capteur selon revendication 1, **caractérisé par le fait**

**que** la cellule de mesure (115) est installée de manière coaxiale dans un boîtier cylindrique et le fluide pénètre dans le capillaire (C) par une ouverture frontale et quitte à l'extrémité du capillaire par un canal, perpendiculairement à la paroi cylindrique du boîtier.

**8.** Capteur selon revendication 7, **caractérisé par le fait**

**qu'**il est utilisable dans un perçage normalisé d'un appareil hydraulique.

**9.** Capteur selon revendication 1, **caractérisé par le fait**

**que** le système de lentilles est constitué chacun d'au moins une lentille divergente (120) et une lentille convergente (121) disposées devant la source lumineuse (110) et devant le détecteur optique (111).

**10.** Capteur selon revendication 1, **caractérisé par le fait**

**qu'**un premier détecteur optique (111) est disposé dans l'axe optique (z).

**11.** Capteur selon revendication 10, **caractérisé par le fait**

**qu'**au moins un autre détecteur à lumière diffuse (211) est disposé perpendiculairement au premier détecteur optique (111).

**12.** Capteur selon revendication 1, **caractérisé par le fait**

**que** la source lumineuse (110) est formée par une LED qui émet une lumière linéaire.

**13.** Capteur selon revendication 12, **caractérisé par le**

**fait**

**que** la LED a été construite de façon combinée avec une lentille convergente (121) et un diaphragme (112).

14. Capteur selon revendication 1, **caractérisé par le fait**

    **que** les détecteurs optiques (111, 211) ont été construits avec une ou plusieurs photodiodes ainsi qu'une lentille combinée et des diaphragmes.

15. Capteur selon revendication 1, **caractérisé par le fait**

    **que** les deux bobines différentielles (116) sont excitées avec des courants opposés de haute fréquence, de telle sorte que l'intensité du champ magnétique est en permanence égale à zéro au centre du local de contrôle (K).

16. Capteur selon revendication 1, **caractérisé par le fait**

    **qu'**il est prévu un dispositif de mesure d'humidité (170) qui rend la teneur en eau du fluide mesurable par absorption de micro-ondes.

17. Capteur selon revendication 1, **caractérisé par le fait**

    **qu'**il est prévu un étalon de calibration (20) sur une porteuse optiquement et magnétiquement transparente, sur laquelle sont placées lithographiquement des microstructures ayant la taille et la forme des particules à détecter.

18. Procédé de mesurage des particules (p) dans un fluide avec un capteur (1) selon l'une des revendications précédentes, **caractérisé par le fait**

    - **que** le fluide est pressé pour un débit défini à travers le capillaire (C),
    - **qu'**une image de la particule (p) est saisie lorsque cette dernière traverse le local de contrôle (K) via le premier détecteur optique (111),
    - **que** le détecteur magnétique renseigne sur la présence possible d'une particule magnétisable,
    - **que** le nombre des particules saisies (p) est compté et
    - leur taille est évaluée.

19. Procédé selon revendication 18, **caractérisé par le fait**

    - **que** les détecteurs à lumière diffuse (211) renseignent si des bulles de gaz sont enfermées dans le fluide.

20. Procédé selon revendication 18, **caractérisé par le fait**

    - **qu'**on détermine, sur la base de l'intensité des signaux mesurés sur le premier détecteur optique (211), si des bulles de gaz sont enfermées dans le fluide.

21. Procédé selon revendication 18, **caractérisé par le fait**

    **qu'**un signal d'alarme est émis en cas de dépassement du nombre de particules saisies (n) et/ou de la taille pendant une unité de temps.

22. Procédé selon revendication 18, **caractérisé par le fait que** les signaux du capteur sont amplifiés et rendus audibles grâce à un haut-parleur.

23. Procédé selon revendication 22, **caractérisé par le fait que** la plage de fréquence du signal du capteur est intégré par transformation dans la plage de fréquence audible.

24. Procédé selon revendication 18, **caractérisé par le fait que** la présentation des valeurs mesurées se fait sur un dispositif d'affichage avec un axe temporel non-linéaire.

25. Procédé selon revendication 18, **caractérisé par le fait**

    **qu'**afin de calibrer le capteur, il est introduit dans le capillaire (C) un étalon de calibration (20) présentant des marquages optiques et/ou magnétiques (M, MA) qui produisent des effets optiques et/ou magnétiques tels que les particules dans le local de contrôle (K).

26. Utilisation d'un capteur selon l'une des revendications de 1 à 17, **caractérisé par le fait qu'**il est inséré dans un circuit d'essai (PKL) pour composants hydrauliques et le degré de contamination (G) de ces derniers est ainsi déterminé.

27. Utilisation d'un capteur selon l'une des revendications de 1 à 17, **caractérisé par le fait qu'**il est inséré dans un dispositif de nettoyage pour un fluide hydraulique.

EP 2 864 758 B1

# Fig. 1

# Fig. 2

16

# Fig. 3

# Fig. 4

# Fig. 5

# Fig. 6

# Fig. 7

Fig. 8

EP 2 864 758 B1

**Fig. 9**

## Fig. 10

## Fig. 11

# Fig. 12

n,V

_W_

D

# Fig. 13

20

M

MA

**IN DER BESCHREIBUNG AUFGEFÜHRTE DOKUMENTE**

**In der Beschreibung aufgeführte Patentdokumente**

- WO 2007121879 A1
- US 20100297780 A1
- US 20100033158 A1
- WO 9740360 A1
- DE 8137093